# EUROPEAN PATENT APPLICATION

(11) **EP 1 961 598 A1**
(43) Date of publication of application: **27.08.2008**
(21) Application number: 08001248.7
(22) Date of filing: 23.01.2008
(51) Int. Cl.: B60H 1/32, F28D 7/10

(54) **Internal heat exchanger for automotive air conditioner**

(30) Priority: 23.02.2007 JP 2007044500
(71) Applicant: TGK CO., Ltd., Hachioji-shi, Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(57) **Abstract**

A double pipe type internal heat exchanger (10) for an automotive air conditioner provides sufficient length necessary for a proper heat exchange even when the evaporator (3) and the expansion valve (2) are disposed very close to a partition wall (1) between a vehicle compartment C() and the engine room (R). A first double pipe (11) is disposed between the expansion valve (2) and the evaporator (3), and the partition wall (1). A second double pipe (12) is disposed within the engine room (r) and extends from the first double pipe (11). The first and second double pipes (11, 12) are connected by a pipe connecting member (15) preventing disconnection of the connecting portions of the first and second double pipes (11) and (12).

## Description

This invention relates to an internal heat exchanger according to the preamble of claim 1.

For automotive air conditioners, it has been proposed in view of environmental problems that refrigerant should no longer be a substitute fluon (HFC-134a) but a natural refrigerant like carbon dioxide. However, to enhance the system efficiency with carbon dioxide an internal heat exchanger is used in a known refrigeration cycle (JP-A-2001-108308). In the internal heat exchanger heat exchange is performed between high-temperature, high-pressure refrigerant flowing from a gas cooler to an expansion valve and refrigerant flowing from an accumulator to the compressor. Refrigerant from the gas cooler is further cooled by the internal heat exchanger whereby the enthalpy of refrigerant is lowered at the expansion valve and the evaporator. Further, refrigerant drawn from the accumulator is further superheated by the internal heat exchanger whereby the enthalpy is increased at the inlet of the compressor. This enhances the system efficiency, that is, the performance coefficient and cooling power of the refrigeration cycle.

In contrast, also for a refrigeration cycle using HFC-134a or gases having equivalent characteristics, a system employing the internal heat exchanger is contemplated, and it is to be expected that the system efficiency is improved by the internal heat exchanger.

The internal heat exchanger known from JP-A-2001-108308 has high-pressure and low-pressure passages, for passing high-temperature, high-pressure refrigerant, and low-temperature, low-pressure refrigerant, respectively. The high-pressure passage has a pipe connected to an inlet side of the passage for receiving condensed liquid refrigerant from a receiver, and a pipe connected to an outlet side of the passage for delivering the liquid refrigerant to the expansion valve. The low-pressure passage has a pipe connected to an inlet side of the passage, for receiving refrigerant from the evaporator, and a pipe connected to an outlet side of the passage for delivering the refrigerant to the compressor.

JP-A-2006-338152 (EP 07 022 486.0) proposes to use instead pipes of the refrigeration cycle to function as the internal heat exchanger, rather than to dispose an independent internal heat exchanger in the refrigeration cycle. According to this proposal, a double pipe, which is formed by concentrically arranging a high-pressure pipe for passing high-temperature, high-pressure refrigerant, and a low-pressure pipe for passing low-temperature, low-pressure refrigerant, is disposed such that heat exchange is performed between refrigerant flowing through an inner pipe, and refrigerant flowing through a space between the inner pipe and an outer pipe, via the inner pipe. At one end of the double pipe, the high-pressure pipe is connected to the expansion valve, and the low-pressure pipe is connected to an outlet of the evaporator. Further, to the other end of the double pipe is attached a pipe joint for branching the passages of the double pipe. The pipe joint is disposed with one end face at a partition wall which separates the engine room and the vehicle compartment. The high-pressure pipe from the receiver and the low-pressure pipe to the compressor both disposed in the engine room are separately attached to the end face of the pipe joint. During the assembly procedure in the engine room, a pipe of a high-pressure system can be arranged in advance, but a pipe of a low-pressure system is required to be attached to the compressor after the engine is finally mounted in the engine room, since the compressor is mounted on the engine. This makes it necessary to connect the pipe of the low-pressure system and the pipe of the high-pressure system in the engine room separately from connection of the evaporator and the expansion valve in the vehicle compartment. In the proposal, the evaporator and the expansion valve both situated within the vehicle compartment are connected to the partition wall by the double pipe using the double pipe as a piping in the vehicle compartment and as the internal heat exchanger. This structural principle might suffer from the problem that the internal heat exchanger does not necessarily function effectively since the locations of the evaporator and the expansion valve in the vehicle compartment are different depending on the vehicle type. For example, when the evaporator and the expansion valve have to be arranged close to the partition wall, the double pipe between the evaporator, the expansion valve, and the partition wall inevitably might be too short for properly performing efficient heat exchange.

It is an object of the invention to provide an internal heat exchanger for an automotive air conditioner capable of properly performing heat exchange even when the double pipe disposed between the partition wall on one side, and the evaporator and the expansion valve at the other side should be short.

This object is achieved with the features of claim 1.

The internal heat exchanger according to the invention is based on the principle of separately arranging the first double pipe in the vehicle compartment and the second double pipe in the engine room. Hence it is impossible to allocate at least a part of the length of the internal heat exchanger necessary for a proper heat exchange also to the engine room side, e.g. for a vehicle type having the evaporator and the expansion valve arranged in close vicinity to the partition wall. At least a part of the internal heat exchanger is disposed to extend into the engine room. One end of the internal heat exchanger on a side which needs to be connected to the compressor is positioned forward of the partition wall. This makes it easy to establish a connection between the compressor secured on the engine and the intake pipe of the compressor, and the internal heat exchanger, after the engine has been mounted in the engine room, even if an end of the internal heat exchanger should be difficult to access during assembly work.

### Brief description of the drawings:

- Fig. 1: is a sectional view of a first embodiment of an internal heat exchanger and an expansion valve,
- Fig. 2A: is a sectional view of a part of a first double pipe of a second embodiment,
- Fig. 2B: is a sectional view of a part of a second double pipe of the second embodiment, and.
- Fig. 3: is a sectional view of a third embodiment of an internal heat exchanger.

In a refrigeration cycle of an automotive air conditioner, a compressor, a condenser, and a receiver, none of which are shown in Fig. , are arranged in an engine room R of a vehicle, and an expansion valve 2 and an evaporator 3 are arranged in a vehicle compartment C separated from the engine room by a partition wall 1. The expansion valve 2 is accommodated in a casing 4 which is mounted on an end face of the evaporator 3 in a manner covering an inlet port and an outlet port of the evaporator 3. Within the casing 4, a refrigerant outlet of the expansion valve 2 is connected to the inlet port of the evaporator 3. The expansion valve 2 and the evaporator 3 are connected to the receiver and the compressor room via an internal heat exchanger 10.

The internal heat exchanger 10 is separated into a first double pipe 11 on the vehicle compartment side and a second double pipe 12 on the engine room side with the partition wall 1 as intermediate a boundary. The first double pipe 11 comprises an inner pipe 11a and an outer pipe 11b disposed concentrically with the inner pipe 11a. The second double pipe 12 comprises an inner pipe 12a and an outer pipe 12b disposed concentrically with the inner pipe 12a.

The inner pipe 11a of the first double pipe 11 extends into the casing 4 through an opening formed in a side surface of the casing 4, and is directly connected to the inlet port of the expansion valve 2 accommodated in the casing 4 such that the inner pipe 11a supplies high-temperature, high-pressure refrigerant to the expansion valve 2. The outer pipe 11b is connected to the opening formed in the side surface of the casing 4 such that low-temperature, low-pressure refrigerant derived from the evaporator 3 is guided into a space between the outer pipe 11b and the inner pipe 11 via the casing 4.

The first double pipe 11 e.g. has some flexibility. In order to reinforce an end of the double pipe opposite to an end of the double pipe attached to the casing 4, a hollow cylindrical reinforcing member 14 is joined to the outer pipe 11b. A shock-absorbing support material 13 is mounted on an outer periphery of the reinforcing member 14. The shock-absorbing support material 13 is pressed against the partition wall 1 by the elasticity of the first double pipe 11, and in this state, supports the reinforcing member 14 disposed to extend through a through hole 1a of the partition wall 1.

The second double pipe 12 has the inner pipe 12a connected to the inner pipe 11a of the first double pipe 11, and the outer pipe 12b connected to the reinforcing member 14. A pipe-connecting member 15 is fitted on respective connecting portions of the reinforcing member 14 and the outer pipe 12b, and constrains respective ribs formed on the reinforcing member 14 and the outer pipe 12b to each other to thereby hold the reinforcing member 14 and the outer pipe 12b connected in a state prevented from being disconnected from each other. A joint member 16 bent into an L-shape is joined to an end of the outer pipe 12b opposite to the outer pipe connecting portion.

During an assembly process, and after an engine is placed in the engine room, an intake pipe of the compressor mounted on the engine is connected to the joint member 16. The inner pipe 12a of the second double pipe 12 extends outwardly through e.g. a knee portion of the joint member 16, and the knee portion of the joint member 16 from which the inner pipe 12a extends outwardly is hermetically joined to the inner pipe 12a by brazing. A part of the inner pipe 12a extended out of the joint member 16 later serves as a pipe for introducing high-temperature, high-pressure refrigerant.

When, within the engine room, the compressor is driven by the engine to compress refrigerant, the compressed high-temperature, high-pressure refrigerant is condensed by the condenser. The condensed refrigerant is separated into gas and liquid by the receiver, and the liquid refrigerant obtained by the gas/liquid separation is introduced into the internal heat exchanger 10 and flows through the inner pipe 12a of the second double pipe 12 and the inner pipe 11a of the first double pipe 11 to the expansion valve 2. The expansion valve 2 throttles and expands the liquid refrigerant into low-temperature, low-pressure refrigerant, and supplies the low-temperature, low-pressure refrigerant into the evaporator 3. In the evaporator 3, the supplied refrigerant exchanges heat with air in the vehicle compartment whereby it is evaporated, which cools the air in the vehicle compartment. The refrigerant evaporated by the evaporator 3 is introduced through the casing 4 into the internal heat exchanger 10 and flows through a passage between the inner pipe 11a and the outer pipe 11b of the first double pipe 11 and a passage between the inner pipe 12a and outer pipe 12b of the second double pipe 12, and then through the joint member 16 to the compressor.

The expansion valve 2 controls the flow rate based on the temperature and pressure of refrigerant from the evaporator 3, whereby refrigerant passing through the evaporator 3 is completely evaporated. The refrigerant coming from the evaporator 3 is controlled such that it has a predetermined degree of superheat.

The internal heat exchanger 10 performs heat exchange between the high-temperature, high-pressure refrigerant flowing through the inner pipe 12a of the second double pipe 12 and the inner pipe 11a of the first double pipe 11, and the low-temperature, low-pressure refrigerant flowing through the passage between the inner pipe 11a and outer pipe 11b of the first double pipe 11 and the passage between the inner pipe 12a and outer pipe 12b of the second double pipe 12. Refrigerant entering the expansion valve 2 is further cooled such that the enthalpy of refrigerant at the inlet port of the expansion valve 2 and of refrigerant at the inlet port of the evaporator 3 are reduced. At the same time refrigerant drawn into the compressor will be further superheated by the heat exchanger such that the enthalpy of refrigerant at an inlet port of the compressor is increased. This enhances the performance coefficient of the refrigeration cycle, which is represented by the ratio between the enthalpy difference between the inlet port of the evaporator 3 and the inlet port of the compressor and the enthalpy difference between the inlet port and an outlet port of the compressor. This improves the cooling power of the refrigeration cycle and the system efficiency.

The internal heat exchanger 10 is configured to be connectably separated at an intermediate portion, so that also in a vehicle in which the distance from the expansion valve 2 and the evaporator 3 to the through hole 1a of the partition wall 1 is short, the internal heat exchanger 10 can be extended into the engine room by the second double pipe 12ensuring a length sufficient for a proper heat exchange, which could not be ensured only by the first double pipe 11 alone.

As in the internal heat exchanger 10 high-pressure refrigerant flows through the inner pipe 11a of the first double pipe 11 and the inner pipe 12a of the second double pipe 12, even if refrigerant leaks through connecting portions of the inner pipes, it only may leak into the low-pressure side passages, which eliminates the fear that refrigerant could leak into the atmosphere.

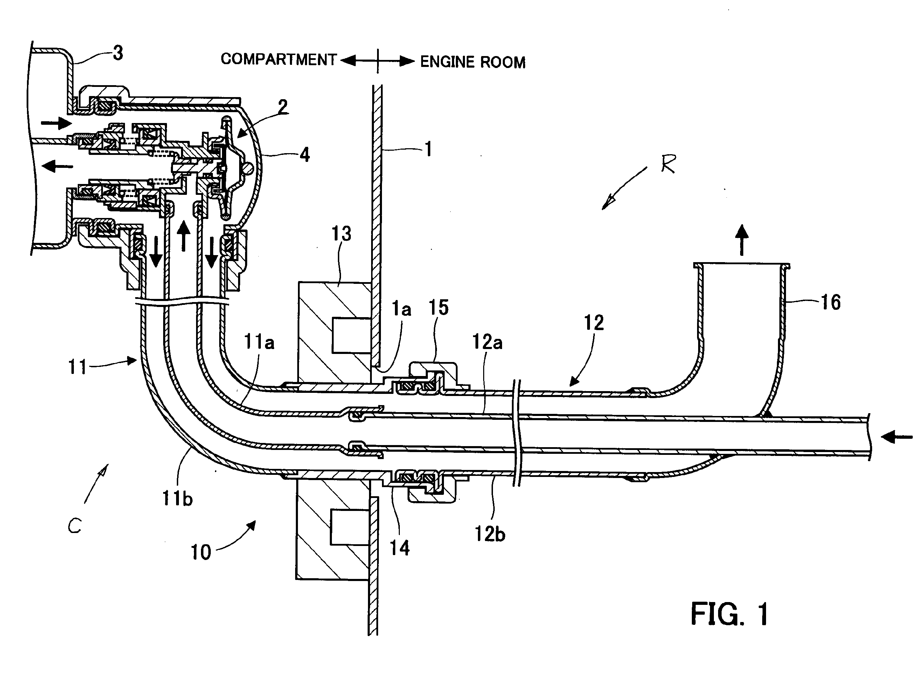

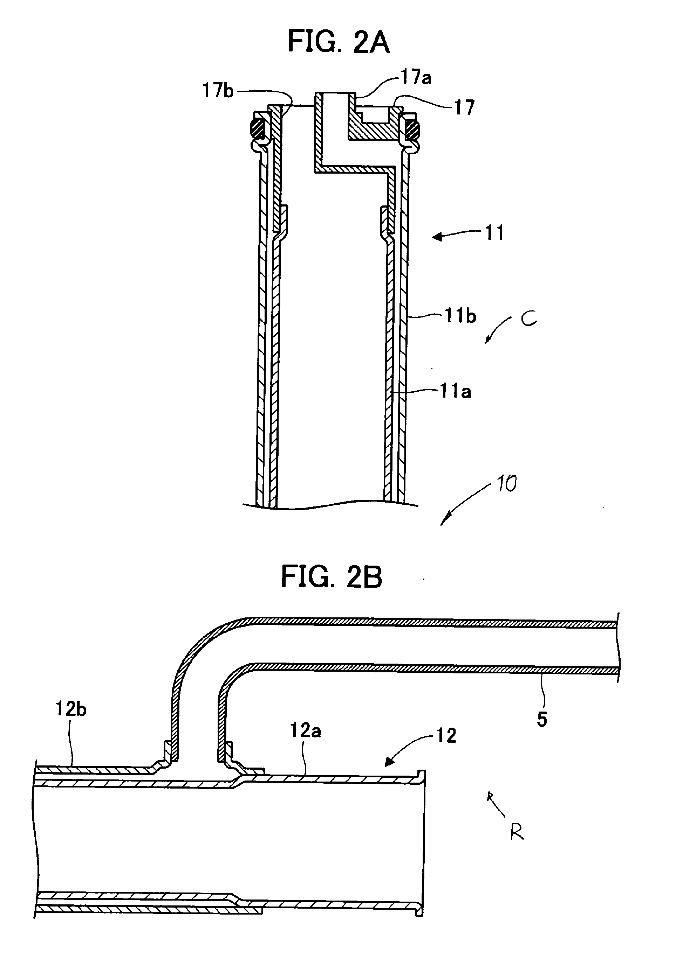

The constructions of the expansion valve 2 and the casing 4 to which is connected the first double pipe 11 are in the second embodiment of Figs 2A and 2B the same as those shown in Fig. 1. The inlet port of the expansion valve 2 (not shown in Figs 2A and 2B) is positioned substantially in the centre of the opening formed in the side surface of the casing 4. Therefore in the internal heat exchanger of Figs 2A, 2B, the construction of the first double pipe 11 is changed.

As shown in Fig. 2A, in the first double pipe 11, a connecting member 17 for changing the direction of the refrigerant flow is joined to an end (upper end in Fig. 2A) of the first double pipe 11 to which are connected the expansion valve 2 and the casing 4. The connecting member 17 has a hollow cylindrical portion 17a substantially in the centre such that the hollow cylindrical portion 17a extends toward the casing 4. The central opening of the hollow cylindrical portion 17a is formed such that it extends approximately to the centre of the connecting member 17 in the direction of the depth thereof toward the first double pipe 11, and further extends therefrom through a side of the hollow cylindrical portion 17a. Thus, the hollow cylindrical portion 17a forms a high-pressure passage of the internal heat exchanger, and is connected to the inlet port of the not shown expansion valve 2. Further, the connecting member 17 has a low-pressure passage 17b in which part of the periphery of the hollow cylindrical portion 17a extends therethrough to an end face (lower end face in Fig. 2A) situated opposite from an end of the portion 17a connected to the inlet port of the expansion valve 2 such that the part is generally U-shaped in cross-section. The lower end face of the connecting member 17 has a hollow cylindrical shape, and is joined to the inner pipe 11a of the first double pipe 11. The connecting member 17 is joined to the outer pipe 11b of the first double pipe 11 at a position upstream of the position where the high-pressure passage is open. This makes it possible to interchange the refrigerant flows between the inside and outside of the inner pipe 11a of the first double pipe 11 with each other.

The second double pipe 12 (Fig. 2B) has the inner pipe 12a radially expanded on a side thereof opposite to the side where it is connected the first double pipe 11, whereby the inner pipe 12a and the outer pipe 12b are joined to each other at their contact portions to close the passage formed between the inner pipe 12a and the outer pipe 12b. The outer pipe 12b is joined to a laterally branching-off high-pressure pipe 5 for introducing high-temperature, high-pressure refrigerant, in the vicinity of the junction between the outer pipe 12b and the inner pipe 12. The expanded portion of the inner pipe 12a forms a joint for connecting the second double pipe 12 to the not shown intake pipe of the compressor.

The first double pipe 11 and the second double pipe 12 are connected at the not shown partition wall 1 by a generally employed method for connecting between double pipes.

The internal heat exchanger according to the second embodiment in Figs 2A, 2B is configured such that high-temperature, high-pressure refrigerant is caused to flow through the passage between the inner pipe 11a and outer pipe 11b of the first double pipe 11, and the passage between the inner pipe 12a and outer pipe 12b of the second double pipe 12, so that the outer pipe 11b of the first double pipe 11 and the outer pipe 12b of the second double pipe 12 always have a high temperature. This prevents dew condensation on the internal heat exchanger, thereby making it unnecessary to cover the outer periphery of the internal heat exchanger with a heat insulator.

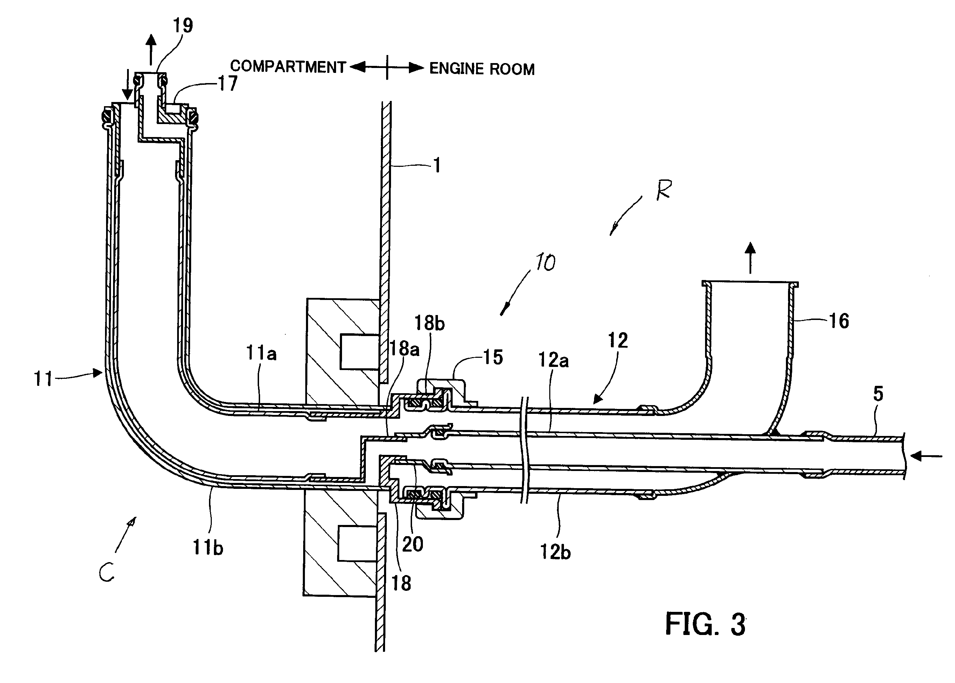

The internal heat exchanger (third embodiment) in Fig. 3 interchanges the directions of the respective refrigerant flows in the vehicle compartment and the engine room with each other. The first double pipe 11 in the vehicle compartment is configured such that high-temperature, high-pressure refrigerant is caused to flow through the passage between the inner pipe 11a and outer pipe 11b, and low-temperature, low-pressure refrigerant is caused to flow through the inner pipe 11a. The second double pipe 12 in the engine room is configured such that high-temperature, high-pressure refrigerant is caused to flow through the inner pipe 12a, and low-temperature, low-pressure refrigerant is caused to flow through the passage between the inner pipe 12a and outer pipe 12b.

The first double pipe 11 has opposite ends provided with connecting members 17 and 18 for respectively changing the flow direction. The connecting member 17 connected to the expansion valve 2 and the casing 4 is the same as the connecting member 17 provided in the internal heat exchanger in Figs 2A, 2B. Here, a high-pressure pipe 19 connected to the opening of the inlet port of the expansion valve 2 is joined to the hollow cylindrical portion 17a extending axially outward from approximately the centre of the connecting member 17. The connecting member 18 is connected to the second double pipe 12 in the engine room, and a high-pressure pipe 20, to which is connected the inner pipe 12a of the second double pipe 12, is joined to a hollow cylindrical portion 18a extending axially outward from approximately the centre of the connecting member 18. The outer pipe 12b of the second double pipe 12 is inserted into an outer hollow cylindrical portion 18b of the connecting member 18. The outer hollow cylindrical portion 18b is formed into a shape in which the cylindrical portion 18b and the outer pipe 12b are connected to each other by the pipe-connecting member 15.

The second double pipe 12 is the same as the second double pipe 12 disposed in the internal heat exchanger 10 in Fig. 1. To an end of the outer pipe 12b is joined the L-shaped joint member 16, and the inner pipe 12a is extended out through the joint member 16. To an end of the inner pipe 12a is joined the high-pressure pipe 5 disposed between the internal heat exchanger 10 and the receiver.

Although in Figs 1 to 3 low-pressure or high-pressure refrigerant flows through the outer pipe 11b of the first double pipe 11 and the outer pipe 12b of the second double pipe 12, high-pressure refrigerant flows through the outer pipe 11b of the first double pipe 11 and low-pressure refrigerant flows through the outer pipe 12b of the second double pipe 12, the internal heat exchanger 10 alternatively may be configured such that low-pressure refrigerant flows through the outer pipe 11b of the first double pipe 11 and high-pressure refrigerant flows through the outer pipe 12b of the second double pipe 12.

## Claims

1. An internal heat exchanger (10) for a refrigeration cycle of an automotive air conditioner, for performing heat exchange between high-temperature, high-pressure refrigerant, and low-temperature, low-pressure refrigerant **characterised in that** :
a first double pipe (11) extends from an inlet port of an expansion valve (2) and an outlet port of an evaporator (3), both arranged in a vehicle compartment (C), to a partition wall (1) separating an engine room (R) from the vehicle compartment (C) the first double pipe (11) comprising a first outer pipe (11b) surrounding a first inner pipe (11a);
a second double pipe (12) is disposed within the engine room (R), and comprises a second outer pipe (12b) surrounding a second inner pipe (12a);
that the second inner pipe and outer pipes (12a, 12b) are respectively connected at the partition wall (1) to the first inner and outer pipes (11a, 11b) of the first double pipe (11); and
that a pipe-connecting member (15) is provided on connecting portions of both double pipes (11, 12) for interconnecting the first and second double pipes (11, 12) such that they are prevented from being disconnected from each other.

2. The internal heat exchanger as in claim 1, **characterised in that** the second outer pipe (12a) of the second double pipe (12) is joined to a joint member (16) for connection to an intake pipe of a compressor, and that the second inner pipe (12a) extends from the inside to the outside of the joint member (16).

3. The internal heat exchanger as in claim 2, **characterised in that** the second inner pipe (12a) either is integrally formed with or connected to a pipe (20) for introducing high-temperature, high-pressure refrigerant.

4. The internal heat exchanger as in claim 1, **characterised in that** the first double pipe (11) includes a connecting member (17) being joined to the first inner pipe (11a) and the first outer pipe (11b) at an end of said connecting member (17) remote from where the first double pipe (11) is connected to the second double pipe (12), that the connecting member (17) has a hollow cylindrical portion (17a) of a high-pressure passage formed to extend axially in an approximately central position of the first inner pipe (11a) with a central opening of the hollow cylindrical portion (17a) communicating with a space defined between the first inner and outer pipes(11a, 11b), and with a low-pressure passage (17b) formed through the connecting member (17) to an end face on a side where part of a periphery of the hollow cylindrical portion (17a) is joined to the first inner pipe (11a),
that the second double pipe (12) closes a passage formed between the second inner and outer pipes (11a, 12b) on a side of a junction between the second outer and inner pipes (12a, 12b) remote from a side where the first double pipe (11) is connected to the second double pipe (12),
and that a pipe (5) is joined to the second double pipe (12) for introducing high-temperature, high-pressure refrigerant into the passage between the second inner and outer pipes (12a, 12b), the second inner pipe (12a) extending outwardly beyond the beyond the position of the joint between the second outer pipe (12b) and the pipe (5), the outwardly extending portion of the second inner pipe (12a) forming a joint for being connected to an intake pipe of a compressor.

5. An internal heat exchanger as in claim 1, **characterised in that** the first double pipe (11) is equipped with connecting members (17, 18) at the respective opposite double pipe ends, each connecting member (17, 18) having a hollow cylindrical portion (17a, 18a) of a high-pressure passage formed to extend axially in an approximately central position of the first inner pip (11a) such that a central opening of the hollow cylindrical portion (17a, 18a) communicates with a space formed between the first inner and outer pipes (11a, 11b), and each connecting member (17, 18) having a low-pressure passage (17b, 18b) formed through the respective connecting member (17, 18) to an end face on a side where part of the periphery of the hollow cylindrical portion (17a, 18a) is joined to the first inner pipe (11a).
